# EUROPEAN PATENT SPECIFICATION

(11) **EP 2 460 593 B1**
(45) Date of publication and mention of the grant of the patent: **13.01.2016**
(21) Application number: 11188420.1
(22) Date of filing: 09.11.2011
(51) Int. Cl.: B08B 9/20, B08B 9/30, B67B 7/00, B08B 9/42, B67B 3/22, B67B 7/14

(54) **Bottle washing method**
Flaschenwaschverfahren
Procédé de lavage de bouteilles

(30) Priority: 06.12.2010 SE 1051284
(43) Date of publication of application: 06.06.2012
(73) Proprietor: Detach AB, 645 51 Strangnas (SE)
(72) Inventor: Nilsson, Magnus, 274 62 RYDSGÅRD (SE)
(74) Representative: Rosenquist, Per Olof

(56) References cited:
- WO-A2-2010/140048
- DE-A1-102008 046 608
- IT-A1- UD20 090 113
- JP-A- 6 050 980
- US-A- 3 058 276

## Description

### Field of the Invention

The present invention relates to an automatic bottle wash-up line and more specifically to a method for handling drinking bottles having nipples intended for laboratory animals in an automatic bottle wash-up line.

### Background

Drinking bottles for laboratory animals are provided with nipples. The spout of the nipple can have different lengths. In order to obtain a rational handling the drinking bottles are today placed in baskets, the baskets are placed on carriages and the carriages are transported to a bottle wash-up line. The baskets are placed on a conveyor, the nipples are dismounted from the bottles and are placed in a separate basket adapted to the nipples, which is then also placed on the conveyor. Bottles and nipples are washed and dried in a washing machine, whereupon the bottles are filled with water and the nipples are again mounted on the bottles.

The above process is a rather circumstantial procedure and the capacity of the plant is limited because bottles and nipples are washed in separate baskets and the baskets intended for the nipples have to be returned to the bottle wash-up filling station.

### The invention

In view of the above, one object of the invention is to provide a method of washing-up bottles and nipples together in an efficient way and to eliminate the need of separate baskets for the nipples.

This object is achieved according to the invention with the features according to claim 1.

### Short description of the drawings

The invention will be described more in detail with reference to one embodiment of the invention shown in the drawings, on which:
Fig. 1 schematically shows a bottle wash-up line for drinking bottles for laboratory animals according to the invention, and
Fig. 2 - 5 schematically show a tool for nipple removal and nipple reassembly, respectively, in different working positions.

### Detailed description of the Invention

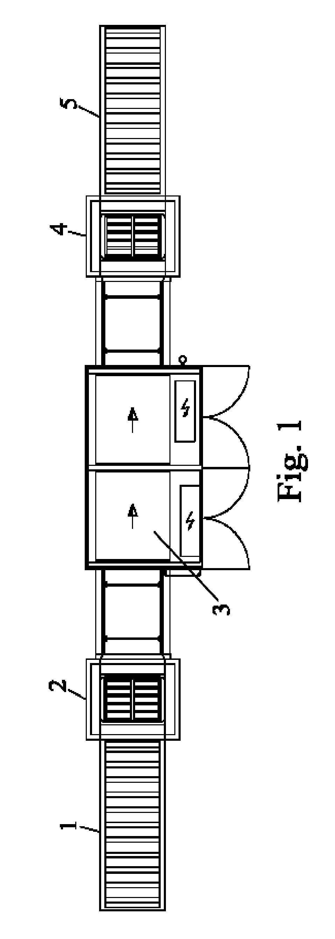

An automatic bottle wash-up line for performing of the method according to the present invention is shown schematically in Fig.1. This bottle wash-up line is primarily intended for washing of drinking bottles for laboratory animals. The bottles can have different sizes. The bottles are transported in bottle baskets within the plant. A suitable basket content would be 18 bottles (3 x 6). This number can vary, but all baskets in one plant should contain the same number of bottles, irrespective of any variations in size of the bottles.

According to the invention, a back side of the baskets is designed to accommodate nipples removed from the bottles and to retain said nipples during the washing procedure.

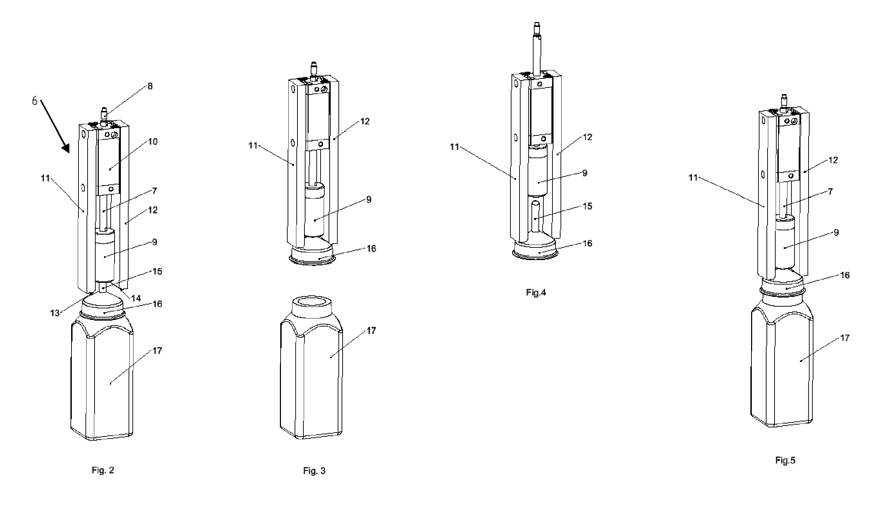

The bottle baskets are transported on a conveyor 1 through the plant. When a basket is placed on the conveyor, it first encounters a nipple removal means 2 comprising a number of tools corresponding to the number of bottles in a basket. This tool will be described more in detail with reference to the subsequent Figs. 2 - 5.

In the nipple removal means 2 the nipples are removed from the bottles and are lifted up from the basket, whereupon the basket is turned upside down and the bottles are emptied of any remaining content. Subsequently the nipples are placed on the backside of the basket, now facing upwards, in brackets or compartments designed for this purpose. Thereafter the basket advances into a washing machine 3, which will not be described in detail in this context, as it is not a part of the present invention. The bottles are washed and dried and the basket is subsequently fed out to a nipple reassembly means 4.

The nipple reassembly means 4 comprises tools similar to the tools of the nipple removal means. Each tool is controlled to lift one of the washed and dried nipples up from the backside of the basket, whereupon the basket is turned back to the original position, the bottles are filled with water, and finally the nipples being held by the tools, are reassembled onto the bottles. Thereafter the baskets are transported out of the plant on a conveyor 5 containing filled-up bottles with mounted nipples.

The tools comprised in the nipple removal and nipple reassembly means 2, 3 are working with compressed air as will be described below. One of the tools is shown in different positions in Figs. 2 - 5.

A predetermined number of tools 6 are arranged in a bracket not shown in detail, which is movable in a vertical direction. The tool has a hollow shaft 7 with a connection 8 for compressed air at an upper end and a mouthpiece 9 at the opposite, free end. The shaft 7 sits in an associated operating cylinder 10, which, in a controlled fashion, moves the shaft in the axial directions between an upper and a lower end position. Further, abutments 11, 12 are arranged, extending in parallel with the shaft and having abutment surfaces 13, 14 at the level of the lower end of the mouthpiece, when the shaft is in the lower end position.

The mouthpiece is designed in such a way that when a spout 15 of a nipple 16 is inserted into the mouthpiece, the nipple with spout remains hanging from the mouthpiece and is lifted up together with the tool, when the tool bracket is lifted up. This can be achieved e.g. with an O-ring arranged inside the mouthpiece 9, which O-ring has a sealing as well as a securing function.

The shaft 7 is connected to a source of compressed air. When a nipple is to be removed from the drinking bottle 17 the mouthpiece is passed over the spout, the nipple is released through a blow of compressed air through the shaft down into the drinking bottle, whereupon the tool bracket is lifted up with the nipples hanging in the mouthpieces. This position is shown in Fig. 3.

When the nipples have been removed from the bottles, see Fig. 3, the bottle basket is turned upside down, and then the tools are lowered down towards the back side of the basket.

Subsequently, the shaft is moved with the aid of the cylinder away from the bottle basket, whereby the spout of the nipple is drawn out of the mouthpiece when the nipple is stopped by the abutment surfaces of the abutments, as is illustrated in Fig. 4. The abutments used to illustrate the invention are only one embodiment. They may be integrated in a plate, which is common for all tools.

In the nipple reassembly means the nipples are picked up by the tools in a way corresponding to what is shown in Figs. 2 and 3, but with the difference that the nipples then are picked up from the back side of the bottle basket, where they have been washed and dried. After that the bottle basket has been turned the right way up and the drinking bottles have been filled up with drinking water, the tool bracket with the tools is lowered, the nipples 16 are pressed onto the bottles 17 with the aid of the abutments, which is indicated in Fig. 5, whereupon the mouthpieces 9 are removed from the spouts of the nipples, in the same way as is shown in Fig. 4 and disclosed in connection therewith, with the difference that the nipples are now sitting on the drinking bottles.

The bottle baskets can be designed in any suitable way with the provision that the bottles shall be detained therein when the baskets are turned upside down, and that there is room for the nipples on the backsides of the baskets.

The technical solutions relating the bottle wash-up line as well as means for turning and transporting of the baskets in the bottle wash-up line are not part of the present invention, and therefore detailed descriptions of these have been omitted.

## Claims

1. A method for the handling of laboratory animal drinking bottles (17) provided with nipples (16) in an automatic bottle wash-up line, in which bottles with nipples arranged in a basket adapted for this purpose are placed on a conveyor for transport to said bottle wash-up line, comprising the following steps:
removing the nipples (16) from the bottles (17) while they remain in the basket in one operation by sealingly attaching a mouthpiece (9) to each nipple (16), letting a blow of compressed air through said mouthpiece, and lifting up of he nipples (16) from the bottles,
turning the basket upside down with the bottles (17) retained therein with the respective bottle mouth pointing downwards,
placing the nipples (16) onto a backside of the overturned basket facing upwards in compartments or brackets therein designed for this purpose,
introducing the basket into a washing machine (3) in which the bottles (17) and nipples (16) are washed and dried simultaneously,
removing the basket from the washing machine and lifting up of the nipples (16) from said bottom of the basket,
turning the basket back into the original position with the bottles (17) having their bottle mouths upwards,
filling the bottles (17) with water, and finally
re-assemblying the nipples (16) onto the bottles (17).

## Patentansprüche

1. Verfahren zur Handhabung von mit Saugern (16) versehenen Trinkflaschen (17) für Labortiere in einer automatischen Flaschenwaschstraße, wobei in einem für diesen Zweck ausgeführten Korb angeordnete Flaschen mit Saugern auf eine Fördereinrichtung für den Transport zu der Flaschenwaschstraße platziert werden, mit den folgenden Schritten:
Entfernen der Sauger (16) von den Flaschen (17), während sie in dem Korb bleiben, in einem Arbeitsgang durch abdichtendes Befestigen eines Mundstücks (9) an jedem Sauger (16), wobei Druckluft durch das Mundstück gelassen wird und die Sauger (16) von den Flaschen abgehoben werden,
Umdrehen des Korbs mit den darin festgehaltenen Flaschen (17), wobei die jeweilige Flaschenmündung nach unten weist,
Platzieren der Sauger (16) auf eine Rückseite des herumgedrehten Korbs, nach oben weisend, in für diesen Zweck konstruierte Fächer oder Halter,
Einführen des Korbs in eine Waschmaschine (3), in der die Flaschen (17) und die Sauger (16) gleichzeitig gewaschen und getrocknet werden,
Entfernen des Korbs aus der Waschmaschine und Anheben der Sauger (16) vom Boden des Korbs,
Zurückdrehen des Korbs in die Ausgangsstellung, wobei die Flaschenmündungen der Flaschen (17) nach oben weisen,
Füllen der Flaschen (17) mit Wasser und schließlich Wiederanfügen der Sauger (16) auf die Flaschen (17).

## Revendications

1. Procédé pour le traitement de bouteilles à boire pour animaux de laboratoire (17), pourvues de tétines (16), dans une ligne de lavage automatique de bouteilles, dans laquelle les bouteilles avec les tétines, disposées dans un panier prévu à cet effet, sont placées sur un transporteur en vue du transport jusqu'à ladite ligne de lavage de bouteilles, comprenant les étapes suivantes :
enlever les tétines (16) des bouteilles (17) au cours de leur séjour dans le panier en une opération en attachant de manière hermétique un embout (9) à chaque tétine (16), en envoyant un flux d'air comprimé à travers ledit embout, et en soulevant les tétines (16) des bouteilles,
retourner le panier avec les bouteilles (17) retenues dans celui-ci avec les embouchures respectives des bouteilles orientées vers le bas,
placer les tétines (16) sur un côté arrière du panier retourné, orientées vers le haut dans des compartiments ou des consoles dans ceux-ci, prévues à cet effet,
introduire le panier dans une machine de lavage (3) dans laquelle les bouteilles (17) et les tétines (16) sont lavées et séchées simultanément,
enlever le panier de la machine de lavage et soulever les tétines (16) dudit fond du panier,
retourner le panier dans sa position d'origine avec les bouteilles (17) ayant leurs embouchures de bouteilles vers le haut,
remplir les bouteilles (17) avec de l'eau, et finalement
assembler à nouveau les tétines (16) sur les bouteilles (17).
